# FASCICULE DE BREVET EUROPEEN

(11) **EP 1 825 107 B1**
(45) Date de publication et mention de la délivrance du brevet: **12.03.2008**
(21) Numéro de dépôt: 05822962.6
(22) Date de dépôt: 30.11.2005
(51) Int. Cl.: F01N 3/022

(54) **STRUCTURE DE FILTRATION, NOTAMMENT FILTRE A PARTICULES POUR LES GAZ D'ECHAPPEMENT D'UN MOTEUR A COMBUSTION INTERNE, ET LIGNE D'ECHAPPEMENT ASSOCIEE**
FILTERUNGSSTRUKTUR, INSBESONDERE EINE PARTIKELFILTERSTRUKTUR FÜR ABGASE EINER BRENNKRAFTMASCHINE UND ENTSPRECHENDE AUSPUFFANLAGE
FILTER STRUCTURE, PARTICULARLY A PARTICULATE FILTER STRUCTURE FOREXHAUST GASES OF AN INTERNAL COMBUSTION ENGINE AND EXHAUST LINE ASSOCIATED THEREWITH

(30) Priorité: 07.12.2004 FR 0413030
(43) Date de publication de la demande: 29.08.2007
(73) Titulaire: Saint-Gobain Centre de Recherches et d'Etudes Européen, 92400 Courbevoie (FR)
(72) Inventeur: GLEIZE, Vincent, F-84000 AVIGNON (FR); BRIOT, Anthony, F-84000 AVIGNON (FR); GIROT, Patrick, F-13300 SALON DE PROVENCE (FR); BARDON, Sébastien, F-13600 LA CIOTAT (FR)
(74) Mandataire: Blot, Philippe Robert Emile
(86) Numéro de dépôt international: PCT/FR2005/002983
(87) Numéro de publication internationale: WO 2006/061488

(56) Documents cités:
- EP-A- 1 291 061
- WO-A-20/04063121
- FR-A- 2 853 255
- FR-A- 2 853 256
- US-A1- 2003 138 596
- US-A1- 2004 108 056

## Description

La présente invention concerne une structure de filtration, notamment filtre à particules pour les gaz d'échappement d'un moteur à combustion interne, du type comprenant :
- au moins des premier et deuxième organes de filtration, chaque organe de filtration présentant une face d'admission des gaz et une face d'évacuation des gaz, reliées entre elles par au moins deux faces latérales, lesdits premier et deuxième organes de filtration présentant respectivement une première et une deuxième faces latérales disposées en regard l'une de l'autre ; et
- un joint de liaison desdites faces, s'étendant entre lesdites faces ;
la première face latérale comprenant, dans sa moitié amont, une première région d'adhérence faible ou nulle avec ledit joint délimitée longitudinalement en amont par une région amont d'adhérence forte avec ledit joint ;
chaque région d'adhérence faible ou nulle avec ledit joint de la première face étant située sensiblement en regard d'une région d'adhérence forte avec ledit joint de la deuxième face, et chaque région d'adhérence forte avec ledit joint de la première face étant située sensiblement en regard d'une région d'adhérence faible ou nulle avec ledit joint de la deuxième face.

De telles structures sont utilisées notamment dans les dispositifs de dépollution des gaz d'échappement de moteurs à combustion interne. Ces dispositifs comportent un pot d'échappement comprenant en série un organe de purification catalytique et un filtre à particules. L'organe de purification catalytique est adapté pour le traitement des émissions polluantes en phase gazeuse, alors que le filtre à particules est adapté pour retenir les particules de suie émises par le moteur.

Dans une structure connue du type précité (FR -A- 2 853 256), les organes de filtration comprennent un ensemble de conduits adjacents d'axes parallèles, séparés par des parois poreuses de filtration. Ces conduits s'étendent entre la face d'admission des gaz d'échappement à filtrer et la face d'évacuation des gaz d'échappement filtrés. Ces conduits sont par ailleurs obturés à l'une ou l'autre de leurs extrémités pour délimiter des chambres d'entrée s'ouvrant sur la face d'admission et des chambres de sortie s'ouvrant sur la face d'évacuation.

Ces structures fonctionnent suivant une succession de phases de filtration et de régénération. Lors des phases de filtration, les particules de suie émises par le moteur se déposent sur les parois des chambres d'entrée. La perte de charge à travers le filtre augmente progressivement. Au-delà d'une valeur prédéterminée de cette perte de charge, une phase de régénération est effectuée.

Lors de la phase de régénération, les particules de suie, composées essentiellement de carbone, sont brûlées sur les parois des chambres d'entrée, grâce à des moyens de chauffage auxiliaires, afin de restituer à la structure ses propriétés originelles.

Cependant, la combustion des suies dans le filtre ne se fait pas de manière homogène. La combustion démarre en amont et au milieu du filtre puis se propage. Des gradients de température apparaissent dans le filtre lors des phases de régénération.

Les gradients de température au sein de la structure de filtration génèrent des dilatations locales d'amplitudes différentes, et par suite, des contraintes longitudinales et transversales dans et/ou entre les différents organes de filtration.

Ces fortes contraintes thermomécaniques sont à l'origine de fissures dans les organes de filtration et/ou dans les joints de liaison entre ces organes de filtration.

Pour limiter le risque d'apparition de ces fissures, la demande FR -A- 2 853 256 précitée propose de créer sur les première et deuxième faces, des régions d'adhérence faible ou nulle avec le joint, notamment par dépôt dans cette région d'un revêtement antiadhésif. La présence de ces régions permet de relâcher les contraintes thermomécaniques dans le joint, et si ces contraintes sont trop fortes, de guider la propagation d'éventuelles fissures dans le joint le long de ces régions.

La disposition des régions d'adhérence faible ou nulle avec le joint permet en outre de retenir les organes de filtration lorsque le joint est fissuré, à l'encontre de la pression des gaz d'échappement qui s'exerce sur les faces d'admission des organes de filtration.

L'invention a pour but principal d'améliorer encore la rétention des organes de filtration à l'encontre de la pression exercée sur une ou plusieurs pièces du filtre lors des étapes de montage du filtre à particules dans la ligne d'échappement ou de la pression des gaz d'échappement lors de l'utilisation du filtre.

A cet effet, l'invention a pour objet une structure de filtration du type précité, caractérisée en ce que la région amont d'adhérence forte est délimitée longitudinalement en amont par une deuxième région d'adhérence faible ou nulle avec ledit joint.

La structure de filtration selon l'invention peut comporter une ou plusieurs des caractéristiques suivantes, prises isolément ou suivant toutes combinaisons techniquement possibles :
- la deuxième région d'adhérence faible ou nulle avec ledit joint s'étend jusqu'à la face d'admission ;
- la longueur maximale de la région amont d'adhérence forte avec ledit joint est inférieure ou sensiblement égale à la longueur minimale des régions d'adhérence faible ou nulle avec ledit joint adjacentes.
- la longueur maximale de la région amont est inférieure au cinquième de la longueur totale du premier organe de filtration ;
- l'une des première et deuxième faces latérales comprend, dans sa moitié aval, une région aval d'adhérence forte avec ledit joint délimitée en amont et en aval par des régions respectives d'adhérence faible ou nulle avec ledit joint ;
- la région d'adhérence faible ou nulle avec ledit joint adjacente en aval à la région aval s'étend jusqu'à la face d'évacuation ;
- la longueur maximale de la région aval d'adhérence forte avec ledit joint est inférieure ou sensiblement égale à la longueur minimale des régions d'adhérence faible ou nulle avec ledit joint adjacentes ;
- ladite région aval s'étend sur ladite première face ;
- l'une des première et deuxième faces latérales comprend, entre la région amont et la région aval, au moins une région intermédiaire d'adhérence forte avec ledit joint, et des régions adjacentes d'adhérence faible ou nulle avec ledit joint respectivement situées en amont et en aval de la région intermédiaire ; et
- les longueurs de la région aval, de la région amont et de la région intermédiaire sont sensiblement identiques.

L'invention a également pour objet une ligne d'échappement, caractérisée en ce qu'elle comprend une structure telle que définie ci-dessus.

Des exemples de mise en oeuvre de l'invention vont maintenant être décrits en regard des dessins annexés, sur lesquels :
- la Figure 1 est une vue en perspective d'une première structure de filtration selon l'invention ;
- la Figure 2 est une vue partielle en perspective éclatée de la structure de filtration de la Figure 1 ;
- la Figure 3 est une vue en plan de deux faces en regard des organes de filtration de la Figure 2 ;
- la Figure 4 est une vue partielle, prise en coupe suivant le plan longitudinal IV-IV de la Figure 1, de la première structure de filtration après plusieurs cycles de régénération de la structure de filtration ;
- la Figure 5 est une vue analogue à la Figure 3, d'une deuxième structure de filtration selon l'invention ;
- la Figure 6 est une vue analogue à la Figure 4 de la deuxième structure de filtration selon l'invention ;
- la Figure 7 est une vue analogue à la Figure 3 d'une troisième structure de filtration selon l'invention ; et
- la Figure 8 est une vue analogue à la Figure 4 de la troisième structure de filtration selon l'invention.

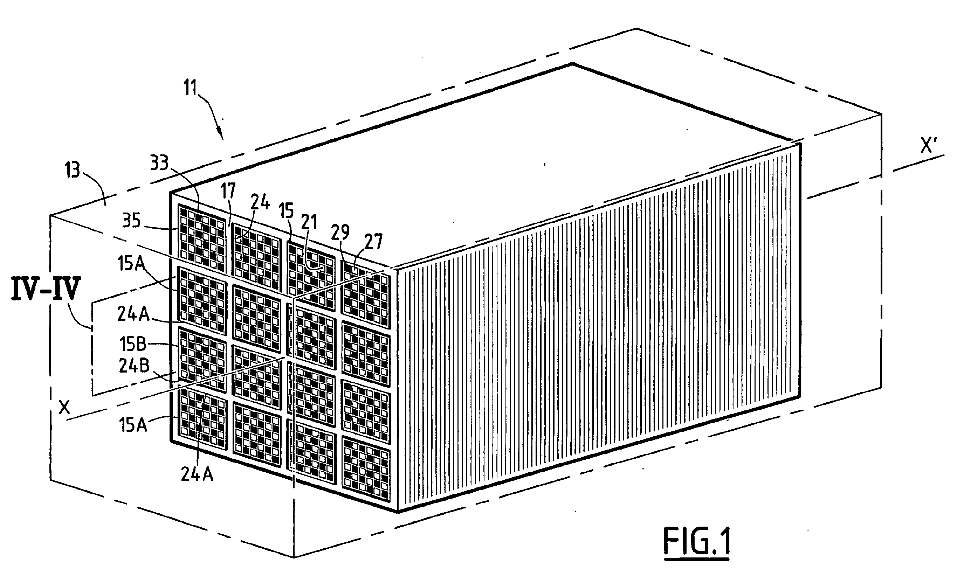

Le filtre à particules 11 représenté sur la Figure 1 est disposé dans une ligne 13 d'échappement des gaz d'un moteur diesel de véhicule automobile, représentée partiellement.

Cette ligne d'échappement 13 se prolonge au-delà des extrémités du filtre à particules 11 et délimite un passage de circulation des gaz d'échappement.

Le filtre à particules 11 s'étend suivant une direction X-X' longitudinale de circulation des gaz d'échappement. Il comprend une pluralité de blocs 15 de filtration reliés entre eux par des joints de liaison 17.

Chaque bloc de filtration 15 est de forme sensiblement parallélépipédique rectangle allongé suivant la direction longitudinale X-X'.

Le terme « bloc de filtration » désigne plus largement un ensemble comportant une face d'admission, une face d'évacuation et au moins deux faces latérales (quatre faces latérales dans l'exemple représenté) qui relient la face d'admission à la face d'évacuation.

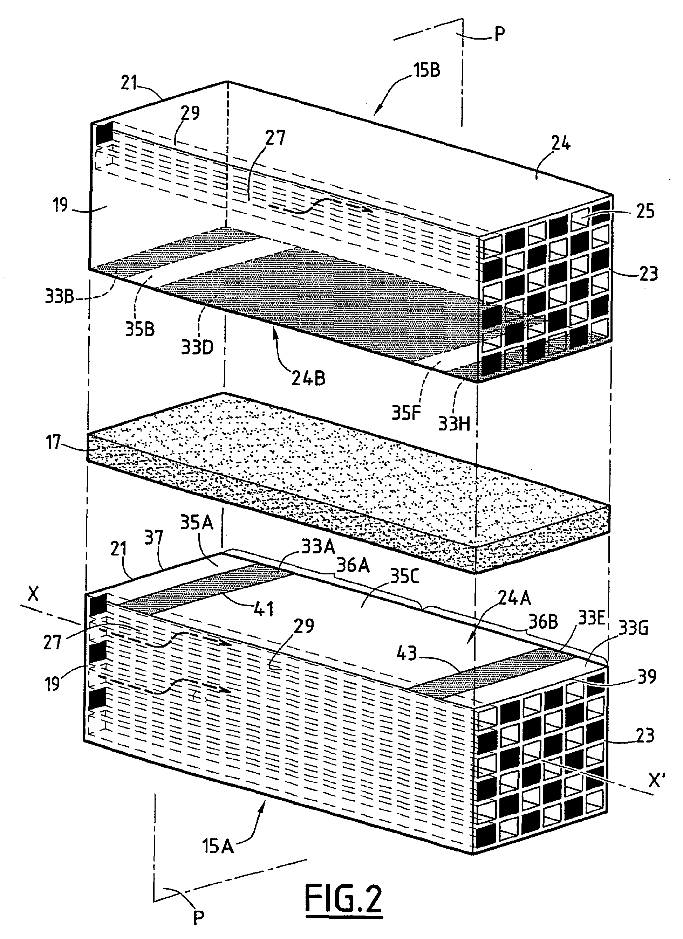

Comme illustré sur la Figure 2, chaque bloc de filtration 15A, 15B comporte une structure de filtration 19 poreuse, une face 21 d'admission des gaz d'échappement à filtrer, une face 23 d'évacuation des gaz d'échappement filtrés, et quatre faces latérales 24.

La structure de filtration poreuse 19 est réalisée en un matériau de filtration constitué d'une structure monolithique, notamment en céramique (cordiérite, carbure de silicium, etc).

Cette structure 19 possède une porosité suffisante pour permettre le passage des gaz d'échappement. Cependant, comme connu en soi, le diamètre des pores est choisi suffisamment petit pour assurer une retenue des particules de suie (compris entre 5 et 100 micromètres).

La structure poreuse 19 comporte un ensemble de conduits adjacents d'axes parallèles à la direction longitudinale X-X'. Ces conduits sont séparés par des parois 25 poreuses de filtration. Dans l'exemple illustré sur la Figure 2, ces parois 25 sont d'épaisseur constante et s'étendent longitudinalement dans la structure de filtration 19, de la face d'admission 21 à la face d'évacuation 23.

Les conduits sont répartis en un premier groupe de conduits d'entrée 27 et un second groupe de conduits de sortie 29. Les conduits d'entrée 27 et les conduits de sortie 29 sont disposés tête-bêche.

Les conduits d'entrée 27 sont obturés au niveau de la face d'évacuation 23 du bloc de filtration 15A, 15B et sont ouverts à leur autre extrémité.

Au contraire, les conduits de sortie 29 sont obturés au niveau de la face d'admission 21 du bloc de filtration 15A, 15B et débouchent suivant sa face d'évacuation 23.

Dans l'exemple illustré Figure 1, les conduits d'entrée 27 et de sortie 29 ont des sections constantes suivant toute leur longueur.

Comme représenté sur la Figure 2, les faces latérales 24A et 24B des blocs 15A et 15B en regard sont planes.

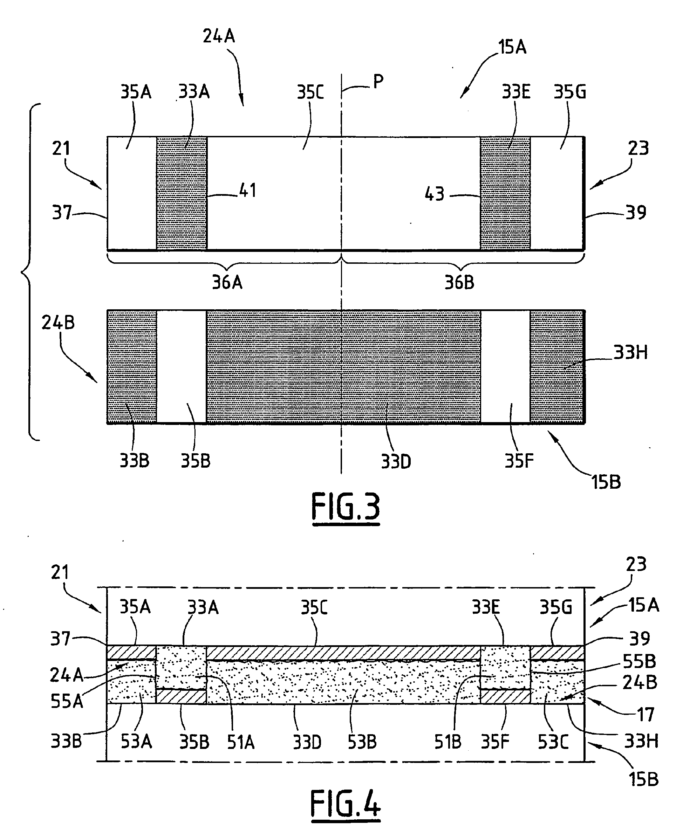

Comme illustré sur les Figures 2 et 3, chaque face plane 24A, 24B d'un bloc de filtration située en regard d'un autre bloc comprend au moins une région 33 fermement solidaire du joint 17, et au moins une région 35 qui, lors de la fabrication de la structure 19, est couverte d'un revêtement antiadhésif. Ce revêtement est par exemple à base de papier, de polytétrafluoroéthylène, de polyéthylène, de polypropylène, de graphite ou de nitrure de bore.

L'adhérence entre le joint de liaison 17 et les faces planes 24 des blocs de filtration 15 dans les régions 33 d'adhérence forte avec le joint est au moins 10 fois supérieure à celle des régions 35 d'adhérence faible ou nulle avec le joint 17. L'adhérence des régions 35 d'adhérence faible ou nulle avec le joint 17 est comprise entre 0 et 50 MPa.

Dans tout ce qui suit, on désignera par « région d'adhérence forte », une région 33 d'adhérence forte avec le joint 17 et par « région d'adhérence faible », une région 35 d'adhérence faible ou nulle avec le joint 17.

La disposition des régions 33 et des régions 35 sur les faces planes 24 des blocs de filtration 15 est illustrée sur les Figures 2 et 3.

La première face 24A du premier bloc de filtration 15A comprend, dans sa moitié amont 36A située en amont d'un plan P transversal médian, une région amont 33A d'adhérence forte, délimitée en aval, à droite sur la Figure par une première région 35C d'adhérence faible qui s'étend de part et d'autre du plan P.

La région amont 33A est en outre délimitée en amont, à gauche sur la Figure, par une deuxième région 35A d'adhérence faible s'étendant jusqu'à l'arête 37 commune à la face d'admission 21 et à la première face 24A.

La première face 24A comprend en outre, dans sa moitié aval 36B, une région aval d'adhérence forte 33E délimitée en amont par la première région 35C d'adhérence faible, et délimitée en aval par une troisième région d'adhérence faible 35G s'étendant jusqu'à l'arête 39 commune à la face d'évacuation 23 et à la première face 24A.

Les régions 33 d'adhérence forte et les régions 35 d'adhérence faible sont de formes sensiblement rectangulaires et s'étendent transversalement sur toute la largeur de la première face 24A.

Dans tout ce qui suit, les longueurs sont prises parallèlement à la direction longitudinale X-X'.

La longueur de la région amont 33A est sensiblement inférieure au quart de la longueur totale du premier bloc de filtration 15A. Dans l'exemple représenté, le rapport de la longueur de la région amont 33A à la longueur totale du bloc 15A est compris entre 0,10 et 0,15.

Dans cet exemple, la longueur de la région amont 33A est inférieure à la longueur de la première région d'adhérence faible 35C et sensiblement égale à la longueur de la deuxième région d'adhérence faible 35A.

Ainsi, la distance entre le bord aval 41 de la région amont 33A et l'arête 37 est inférieure à la moitié de la longueur totale du bloc 15A. La région amont 33A est donc située au voisinage de la face d'admission 21.

La longueur totale de la première région d'adhérence faible 35C est supérieure à la moitié de la longueur totale du bloc 15A, de sorte que la distance entre le bord aval 41 de la région amont 33A et le bord amont 43 de la région aval 33E est supérieure à la moitié de la longueur totale du bloc 15A.

La longueur de la région aval 33E est sensiblement égale à la longueur de la région amont 33A et à la longueur de la troisième région 35G d'adhérence faible.

Chaque région d'adhérence forte 33A, 33E de la première face 24A est disposée sensiblement en regard d'une région 35B, 35F d'adhérence faible, de forme sensiblement identique, sur la deuxième face 24B.

Par ailleurs, chaque région d'adhérence faible 35A, 35C, 35G de la première face 24A est située en regard d'une région 33B, 33D, 33H d'adhérence forte, de forme sensiblement identique, sur la deuxième face 24B.

Le fonctionnement de la première structure de filtration selon l'invention va maintenant être décrit.

Lors d'une phase de filtration (Figure 1), les gaz d'échappement chargés de particules sont guidés jusqu'aux faces d'entrée 21 des blocs de filtration 15 par la ligne d'échappement 13. Comme indiqué par des flèches sur la Figure 2, ils pénètrent ensuite dans les conduits d'entrée 27, et passent à travers les parois 25 de la structure poreuse 19. Lors de ce passage, les suies se déposent sur les parois 25 des conduits d'entrée 27. Ces suies se déposent préférentiellement dans la région de l'axe central du filtre à particules 11 et vers la face d'évacuation 23 des blocs de filtration 15 (à droite sur le dessin).

Les gaz d'échappement filtrés s'échappent par les conduits d'évacuation 29 et sont guidés vers la sortie du pot d'échappement.

Lorsque le véhicule a parcouru 500 km environ, la perte de charge à travers le filtre 11 augmente de manière significative. Une phase de régénération est alors effectuée.

Dans cette phase, les suies sont oxydées par élévation de la température du filtre 11. Cette oxydation est exothermique et démarre au milieu et en amont du filtre. Cela entraîne donc un gradient de température entre les parties amont et aval ainsi qu'entre la périphérie et le centre du filtre.

Par ailleurs, les blocs de filtration 15 et les joints 17 se dilatent sous l'effet de la température. L'amplitude locale de cette dilatation dépend de la température.

Ces variations d'amplitude de dilatation, sous l'effet des gradients de température, génèrent de fortes contraintes thermomécaniques. La présence de régions 35 d'adhérence faible, permet de relâcher les contraintes et d'éviter la création de fissures dans les blocs de filtration 15 ou dans les joints de liaison 17.

Par ailleurs, comme illustré sur la Figure 4, si les contraintes thermomécaniques sont trop fortes pour la structure, le joint 17 peut se fissurer longitudinalement. Toutefois, les régions 35 d'adhérence faible et les régions 33 d'adhérence forte sont agencées de telle sorte que la fissuration se fait dans des zones privilégiées.

Ainsi, comme illustré sur la Figure 4, la propagation des fissures dans les joints 17 est guidée le long des régions 35 d'adhérence faible sur les faces planes 24 des blocs de filtration 15, et transversalement entre ces régions.

Par suite, même si le joint 17 est totalement fissuré, la partie 51A du joint située en regard de la région amont 33A forme une saillie amont parallélépipédique, solidaire du premier bloc 15A. Par ailleurs, les parties 53A et 53B du joint, disposées respectivement en regard des régions 35A et 35C d'adhérence faible, restent solidaires du deuxième bloc 15B. Ces parties 53A et 53B délimitent un créneau amont 55A en creux qui reçoit la saillie 51A.

Ainsi, même si le joint 17 est totalement fissuré, la coopération entre la saillie amont 51A et le créneau amont 55A empêche le déplacement vers l'aval des blocs 15A et 15B, à l'encontre de la pression des gaz d'échappement qui s'exerce sur les faces d'admission 21.

La saillie amont 51A et le créneau amont 55A s'étendent au voisinage de la face d'admission 21, en regard de parties amont des blocs 15A, 15B dans lesquelles les contraintes thermiques sont relativement faibles. Par suite, la rétention des blocs de filtration 15A, 15B est assurée de manière efficace, même si les parties aval de ces blocs 15A, 15B qui sont soumises à de fortes contraintes thermiques, sont détériorées.

Par ailleurs, la partie 51 B du joint située en regard de la région aval 33E de la première face 24A forme une saillie aval solidaire du premier bloc 15A. La saillie aval 51 B coopère avec un créneau creux aval 55B délimité par des parties de joints 53B, 53C s'étendant en regard des régions d'adhérence faible 35C et 35G, les parties 53B et 53C restant solidaires de la deuxième face 24B.

Par suite, si les parties aval des blocs 15A, 15B ne sont pas détériorées, la coopération entre la saillie aval 51 B et le créneau aval 55B contribue également à la rétention des blocs 15A et 15B.

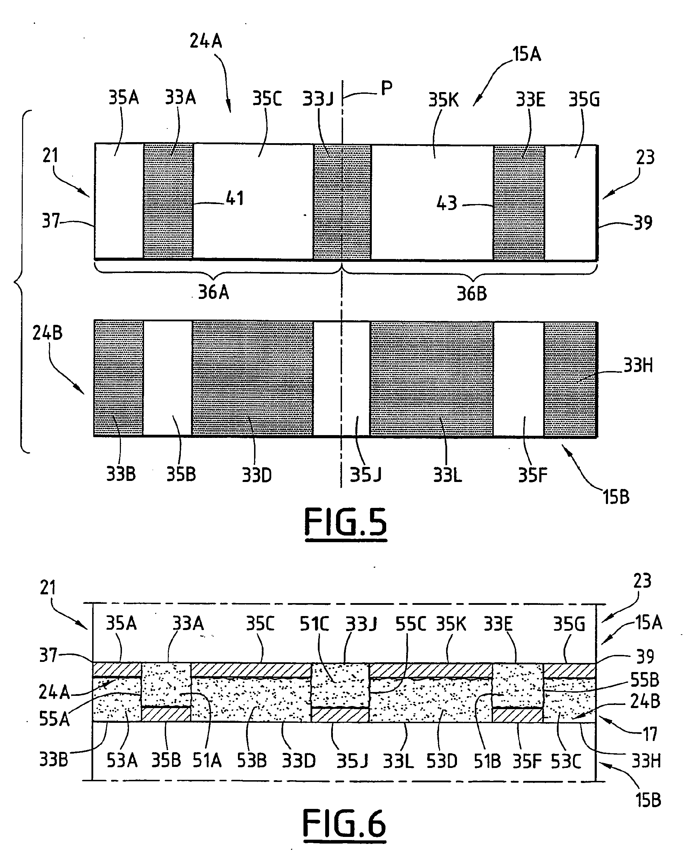

Le filtre 11 représenté sur les Figures 5 et 6 diffère de celui représenté sur la Figure 5 par les caractéristiques suivantes.

La première face 24A comprend une région intermédiaire 33J d'adhérence forte située sensiblement à mi-longueur de la première face 24A.

Cette région 33J présente une longueur sensiblement égale à celle des régions amont 33A et aval 33E. La longueur de la région 33J est par ailleurs inférieure à celle des régions 35C et 35K d'adhérence faible adjacentes.

Au cours du fonctionnement, si le joint 17 se fissure, la partie 51C du joint située en regard de la région intermédiaire 33J forme une saillie intermédiaire. Cette saillie 51C coopère avec un créneau intermédiaire creux 55C délimité par les parties de joints 53B et 53D solidaires de la deuxième face 24B et situées respectivement en regard des régions 35C, 35K d'adhérence faible adjacentes à la région intermédiaire 33J.

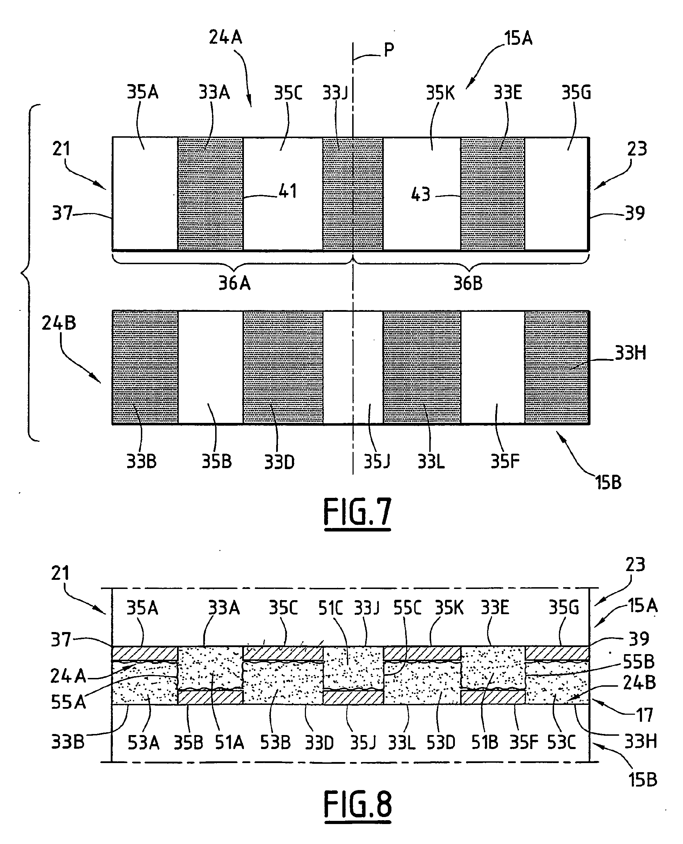

Le filtre 11 représenté sur les Figures 7 et 8 diffère du filtre représenté sur les Figures 5 et 6 en ce que le rapport de la longueur de la région amont 33A à la longueur de la deuxième région 35C d'adhérence faible est supérieur à 0,6. Dans cet exemple, le rapport est sensiblement égal à 0,75.

En variante, la région aval 33E d'adhérence forte, de longueur sensiblement égale à la région amont 33A, s'étend sur la deuxième face 24B.

## Revendications

1. Structure (11) de filtration, notamment filtre à particules pour les gaz d'échappement d'un moteur à combustion interne, du type comprenant :
- au moins des premier et deuxième organes de filtration (15A, 15B), chaque organe de filtration (15A, 15B) présentant une face (21) d'admission des gaz et une face (23) d'évacuation des gaz, reliées entre elles par au moins deux faces (24) latérales, lesdits premier et deuxième organes de filtration (15A, 15B) présentant respectivement une première et une deuxième faces latérales (24A, 24B) disposées en regard l'une de l'autre ; et
- un joint (17) de liaison desdites faces (24A, 24B), s'étendant entre lesdites faces (24A, 24B) ;
la première face latérale (24A) comprenant, dans sa moitié amont (36A), une première région (35C) d'adhérence faible ou nulle avec ledit joint (17) délimitée longitudinalement en amont par une région amont (33A) d'adhérence forte avec ledit joint (17) ;
chaque région (35) d'adhérence faible ou nulle avec ledit joint (17) de la première face (24A) étant située sensiblement en regard d'une région (33) d'adhérence forte avec ledit joint (17) de la deuxième face (24B), et chaque région (33) d'adhérence forte avec ledit joint (17) de la première face (24A) étant située sensiblement en regard d'une région (35) d'adhérence faible ou nulle avec ledit joint (17) de la deuxième face (24B) ;
**caractérisée en ce que** la région amont (33A) d'adhérence forte est délimitée longitudinalement en amont par une deuxième région (35A) d'adhérence faible ou nulle avec ledit joint (17).

2. Structure (11) selon la revendication 1, **caractérisée en ce que** la deuxième région (35A) d'adhérence faible ou nulle avec ledit joint (17) s'étend jusqu'à la face d'admission (21).

3. Structure (11) selon la revendication 1 ou 2, **caractérisée en ce que** la longueur maximale de la région amont (33A) d'adhérence forte avec ledit joint (17) est inférieure ou sensiblement égale à la longueur minimale des régions (35A, 35C) d'adhérence faible ou nulle avec ledit joint adjacentes:

4. Structure (11) selon l'une quelconque des revendications 1 à 3, **caractérisée en ce que** la longueur maximale de la région amont (33A) est inférieure au cinquième de la longueur totale du premier organe de filtration (15A).

5. Structure (11) selon l'une quelconque des revendications précédentes, **caractérisée en ce que** l'une des première et deuxième faces latérales (24A, 24B) comprend, dans sa moitié aval (36B), une région aval (33E) d'adhérence forte avec ledit joint (17) délimitée en amont et en aval par des régions (35C ; 35K, 35G) respectives d'adhérence faible ou nulle avec ledit joint (17).

6. Structure (11) selon la revendication 5, **caractérisée en ce que** la région (35G) d'adhérence faible ou nulle avec ledit joint (17) adjacente en aval à la région aval (33E) s'étend jusqu'à la face d'évacuation (23).

7. Structure (11) selon l'une des revendications 5 ou 6, **caractérisée en ce que** la longueur maximale de la région aval (33E) d'adhérence forte avec ledit joint (17) est inférieure ou sensiblement égale à la longueur minimale des régions (35C ; 35K, 35G) d'adhérence faible ou nulle avec ledit joint (17) adjacentes.

8. Structure (11) selon l'une quelconque des revendications 5 à 7, **caractérisée en ce que** ladite région aval (33E) s'étend sur ladite première face (24A).

9. Structure (11) selon l'une quelconque des revendications 5 à 8, **caractérisée en ce que** l'une des première et deuxième faces latérales (24A, 24B) comprend, entre la région amont (33A) et la région aval (33E), au moins une région (33J) intermédiaire d'adhérence forte avec ledit joint (17), et des régions adjacentes (35C, 35K) d'adhérence faible ou nulle avec ledit joint (17) respectivement situées en amont et en aval de la région intermédiaire (33J).

10. Structure (11) selon la revendication 9, **caractérisée en ce que** les longueurs de la région aval (33E), de la région amont (33A) et de la région intermédiaire (33J) sont sensiblement identiques.

11. Ligne d'échappement (13) **caractérisée en ce qu'**elle comprend une structure (11) selon l'une quelconque des revendications précédentes.

## Claims

1. Filtration structure (11), notably a particle filter for the exhaust gases from an internal combustion engine, of the type comprising:
- at least first and second filtering members (15A, 15B), each filtering member (15A, 15B) having a gas intake side (21) and a gas exhaust side (23) connected to one another by at least two lateral sides (24), said first and second filtering members (15A, 15B) having a first and second lateral side (24A, 24B), respectively, arranged opposite each other; and
- a connecting joint (17) for said sides (24A, 24B), extending between said sides (24A, 24B);
the first lateral side (24A) comprising, in its upstream half (36A), a first region (35C) of low or zero adhesion to said joint (17) bounded longitudinally upstream by an upstream region (33A) of strong adhesion to said joint (17);
each region (35) of low or zero adhesion to said joint (17) of the first side (24A) being located substantially opposite a region (33) of strong adhesion to said joint (17) of the second side (24B), and each region (33) of strong adhesion to said joint (17) of the first side (24A) being located substantially opposite a region (35) of low or zero adhesion to said joint (17) of the second side (24B);
**characterised in that** the upstream region (33A) of strong adhesion is bounded longitudinally upstream by a second region (35A) of low or zero adhesion to said joint (17).

2. Structure (11) according to claim 1, **characterised in that** the second region (35A) of low or zero adhesion to said joint (17) extends as far as the intake side (21).

3. Structure (11) according to claim 1 or 2, **characterised in that** the maximum length of the upstream region (33A) of strong adhesion to said joint (17) is less than or substantially equal to the minimum length of the adjacent regions (35A, 35C) of low or zero adhesion to said joint.

4. Structure (11) according to any one of claims 1 to 3, **characterised in that** the maximum length of the upstream region (33A) is less than one fifth of the total length of the first filtering member (15A).

5. Structure (11) according to any one of the preceding claims, **characterised in that** one of the first and second lateral sides (24A, 24B) comprises, in its downstream half (36B), a downstream region (33E) of strong adhesion to said joint (17), which is bounded upstream and downstream by respective regions (35C; 35K, 35G) of low or zero adhesion to said joint (17).

6. Structure (11) according to claim 5, **characterised in that** the region (35G) of low or zero adhesion to said joint (17), said region being adjacent in the downstream direction to the downstream region (33E), extends as far as the exhaust side (23).

7. Structure (11) according to one of claims 5 or 6, **characterised in that** the maximum length of the downstream region (33E) of strong adhesion to said joint (17) is less than or substantially equal to the minimum length of the adjacent regions (35C; 35K, 35G) of low or zero adhesion to said joint (17).

8. Structure (11) according to any one of claims 5 to 7, **characterised in that** said downstream region (33E) extends over said first side (24A).

9. Structure (11) according to any one of claims 5 to 8, **characterised in that** one of the first and second lateral sides (24A, 24B) comprises, between the upstream region (33A) and the downstream region (33E), at least one intermediate region (33J) of strong adhesion to said joint (17), and adjacent regions (35C; 35K) of low or zero adhesion to said joint (17), which are located respectively upstream and downstream of the intermediate region (33J).

10. Structure (11) according to claim 9, **characterised in that** the lengths of the downstream region (33E), the upstream region (33A) and the intermediate region (33J) are substantially identical.

11. Exhaust pipe (13), **characterised in that** it comprises a structure (11) according to any one of the preceding clams.

## Patentansprüche

1. Filteraufbau (11), insbesondere Partikelfilter für die Auspuffgase eines Verbrennungsmotors, von dem Typ, der folgendes aufweist:
- mindestens ein erstes und ein zweites Filterorgan (15A, 15B), wobei jedes Filterorgan (15A, 15B) eine Fläche (21) für den Eintritt der Gase und eine Fläche (23) für den Austritt der Gase aufweist, die über mindestens zwei seitliche Flächen (24) miteinander verbunden sind, wobei das erste und das zweite Filterorgan (15A, 15B) jeweils eine erste und eine zweite seitliche Fläche (24A, 24B) aufweisen, die einander gegenüberliegend angeordnet sind; und
- ein Verbindungsmaterial (17) zum Verbinden der Flächen (24A, 24B), das sich zwischen den Flächen (24A, 24B) erstreckt;
- wobei die erste seitliche Fläche (24A) in ihrer stromaufwärtigen Hälfte (36A) einen ersten Bereich (35C) mit einer geringen oder gar keiner Haftung an dem Verbindungsmaterial (17) aufweist, der in Längsrichtung stromaufwärts durch einen stromaufwärtigen Bereich (33A) mit einer starken Haftung an dem Verbindungsmaterial (17) begrenzt ist;
- wobei sich jeder Bereich (35) der ersten Fläche (24A), der eine geringe oder gar keine Haftung an dem Verbindungsmaterial (17) besitzt, im wesentlichen gegenüber von einem Bereich (33) der zweiten Fläche (24B) befindet, der eine starke Haftung an dem Verbindungsmaterial (17) besitzt, und wobei sich jeder Bereich (33) der ersten Fläche (24A), der eine starke Haftung an dem Verbindungsmaterial (17) besitzt, im wesentlichen gegenüber von einem Bereich (35) der zweiten Fläche (24B) befindet, der eine geringe oder gar keine Haftung an dem Verbindungsmaterial (17) besitzt;
**dadurch gekennzeichnet,**
**daß** der stromaufwärtige Bereich (33A) mit einer starken Haftung in Längsrichtung stromaufwärts durch einen zweiten Bereich (35A) begrenzt ist, der eine geringe oder gar keine Haftung an dem Verbindungsmaterial (17) besitzt.

2. Aufbau (11) nach Anspruch 1,
**dadurch gekennzeichnet,**
**daß** sich der zweite Bereich (35A) mit einer geringen oder gar keiner Haftung an dem Verbindungsmaterial (17) bis zur Eintrittfläche (21) erstreckt.

3. Aufbau (11) nach Anspruch 1 oder 2,
**dadurch gekennzeichnet,**
**daß** die maximale Länge des stromaufwärtigen Bereichs (33A), der eine starke Haftung an dem Verbindungsmaterial (17) besitzt, kleiner als die oder im wesentlichen gleich der minimalen Länge der benachbarten Bereiche (35A, 35C) ist, die eine geringe oder gar keine Haftung an dem Verbindungsmaterial besitzen.

4. Aufbau (11) nach einem der Ansprüche 1 bis 3,
**dadurch gekennzeichnet,**
**daß** die maximale Länge des stromaufwärtigen Bereichs (33A) kleiner als ein Fünftel der gesamten Länge des ersten Filterorgans (15A) ist.

5. Aufbau (11) nach einem der vorherigen Ansprüche,
**dadurch gekennzeichnet,**
**daß** die eine von der ersten und der zweiten seitlichen Fläche (24A, 24B) in ihrer stromabwärtigen Hälfte (36B) einen stromabwärtigen Bereich (33E) mit einer starken Haftung an dem Verbindungsmaterial (17) aufweist, der stromaufwärts und stromabwärts durch jeweilige Bereiche (35C, 35K, 35G) mit einer geringen oder gar keiner Haftung an dem Verbindungsmaterial (17) begrenzt ist.

6. Aufbau (11) nach Anspruch 5,
**dadurch gekennzeichnet,**
**daß** der Bereich (35G) mit einer geringen oder gar keiner Haftung an dem Verbindungsmaterial (17), der stromabwärts dem stromabwärtigen Bereich (33E) benachbart ist, sich bis zur Austrittfläche (23) erstreckt.

7. Aufbau (11) nach einem der Ansprüche 5 oder 6,
**dadurch gekennzeichnet,**
**daß** die maximale Länge des stromabwärtigen Bereichs (33E), der eine starke Haftung an dem Verbindungsmaterial (17) besitzt, kleiner als die oder im wesentlichen gleich der minimalen Länge der benachbarten Bereiche (35C, 35K, 35G) ist, die eine geringe oder gar keine Haftung an dem Verbindungsmaterial (17) besitzen.

8. Aufbau (11) nach einem der Ansprüche 5 bis 7,
**dadurch gekennzeichnet,**
**daß** sich der stromabwärtige Bereich (33E) bis auf die erste Fläche (24A) erstreckt.

9. Aufbau (11) nach einem der Ansprüche 5 bis 8,
**dadurch gekennzeichnet,**
**daß** die eine von der ersten und der zweiten seitlichen Fläche (24A, 24B) zwischen dem stromaufwärtigen Bereich (33A) und dem stromabwärtigen Bereich (33E) mindestens einen dazwischenliegenden Bereich (33J) mit einer starken Haftung an dem Verbindungsmaterial (17) sowie benachbarte Bereiche (35C, 35K) mit einer geringen oder gar keiner Haftung an dem Verbindungsmaterial (17) aufweist, die sich stromaufwärts bzw. stromabwärts von dem dazwischenliegenden Bereich (33J) befinden.

10. Aufbau (11) nach Anspruch 9,
**dadurch gekennzeichnet,**
**daß** die Längen des stromabwärtigen Bereichs (33E), des stromaufwärtigen Bereichs (33A) und des dazwischenliegenden Bereichs (33J) im wesentlichen identisch sind.

11. Auspuffleitung (13),
**dadurch gekennzeichnet,**
**daß** sie einen Aufbau (11) nach einem der vorherigen Ansprüche aufweist.
